# EUROPEAN PATENT APPLICATION

(11) **EP 4 718 312 A1**
(43) Date of publication of application: **01.04.2026**
(21) Application number: 25205132.1
(22) Date of filing: 26.09.2025
(51) Int. Cl.: G06F 40/216, G06F 40/30, G06F 40/35, G06F 40/44, G06F 40/56, G10L 15/18, H04M 3/493

(54) **DYNAMIC RECREATION OF EXISTING WORKFLOW IVR MENUS USING INTELLIGENT GENERATIVE MODELS**

(30) Priority: 28.09.2024 US 202418900707
(71) Applicant: Mitel Networks Corporation, Ottawa, Ontario K2K 3K1 (CA)
(72) Inventor: Brochonski, Michael, 82620265 Curitiba (BR); Braganza, Jonathan, Ottawa, K2E 6P2 (CA)
(74) Representative: McDougall, James

(57) **Abstract**

A computerized method for converting an interactive voice response (IVR) tree into a natural language conversion architecture. The computerized method includes converting IVR tree audio data into IVR tree text data, the IVR tree audio data includes spoken language generated using the IVR tree during a phone call. The computerized method further includes providing the IVR tree text data to a machine learning model with instructions on how to evaluate the IVR tree text data. The machine learning model can generate a set of natural language prompts based upon the IVR tree text data. The set of natural language prompts can include instructions for directing a received call based upon caller voice input.

## Description

### FIELD

This disclosure relates to the field of telecommunication services. More particularly, the disclosure relates to methods and systems for converting interactive voice response menus into natural language prompts.

### BACKGROUND

IVR (Interactive Voice Response) has been around for many years. Every day, customers call into businesses and are greeted with these voice prompts trying to figure out the reason for their call. These IVRs have gotten more complicated as they try to lookup customer information and make the experience as seamless as possible.

Many of these businesses have existing IVR trees which can be complicated and already in place. Migrating or changing these existing IVR trees can be complex. With the advent of artificial intelligence (AI) tools, many customers could be missing out on new features and the ability to easily build their IVRs using prompts.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a schematic view of a computerized system configured for converting an IVR tree into a natural language conversion architecture according to aspects of this disclosure.
FIG. 2 is a schematic view of an example IVR menu (also referred to as an IVR tree).
FIG. 3 is a block diagram of a computerized system configured for converting an IVR tree into a natural language conversion architecture according to aspects of this disclosure.
FIG. 4 is a flow chart of a computerized method for converting an IVR tree into a natural language conversion architecture according to aspects of this disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### SUMMARY

A first aspect of this disclosure provides a computerized method for converting an interactive voice response (IVR) tree into a natural language conversion architecture, wherein the computerized method comprises the following steps: converting IVR tree audio data into IVR tree text data, the IVR tree audio data includes spoken language generated using the IVR tree during a phone call; providing the IVR tree text data to a machine learning model with instructions on how to evaluate the IVR tree text data; and the machine learning model generating a set of natural language prompts based upon the IVR tree text data, wherein the set of natural language prompts include instructions for directing a received call based upon caller voice input.

The computerized method may further comprise the step of providing an internal IVR architecture data together with the IVR tree text data to the machine learning model, the set of natural language prompts are generated based upon the internal IVR architecture data, and the instructions include how to evaluate the internal IVR architecture data.

The computerized method may further comprise the step of supplementing the IVR tree text data with the internal IVR architecture data prior to providing the IVR tree text data to the machine learning model.

The step of converting IVR tree audio data into IVR tree text data may include utilizing a speech-to-text module to convert the IVR tree audio data into the IVR tree text data.

The step of converting IVR tree audio data into IVR tree text data may include using a depth-first traversal technique for traversing the IVR tree text data.

The IVR tree text data may comprise a structured text file.

The machine learning model may comprise a machine learning transformer model.

A second aspect of this disclosure provides a computerized system configured to convert an interactive voice response (IVR) tree into a natural language conversion architecture, wherein the computerized system comprises: a processor configured to convert IVR tree audio data into IVR tree text data, the IVR tree audio data includes spoken language generated using the IVR tree during a phone call; and a machine learning model configured to receive the IVR tree text data for generating a set of natural language prompts based upon the IVR tree text data, wherein the set of natural language prompts include instructions for directing a received call based upon caller voice input.

The computerized system may further comprise a database comprising an internal IVR architecture data, the machine learning model is configured to receive the internal IVR architecture data together with the IVR tree text data for generating the set of natural language prompts based upon the IVR tree text data and the internal IVR architecture data.

The processor may be further configured to supplement the IVR tree text data using the internal IVR architecture data prior to providing the IVR tree text data to the machine learning model.

The processor may comprise a speech-to-text module to convert the spoken language into the IVR tree text data. The processor may use a depth-first traversal technique for traversing the IVR tree text data when converting the spoken language into the IVR tree text data. The IVR tree text data may comprise a structured text file.

The machine learning model may comprise a machine learning transformer model.

The computerized system may further comprise a large language model (LLM) module configured to analyze the set of natural language prompts.

A third aspect of this disclosure provides a computerized apparatus configured to convert an interactive voice response (IVR) tree into a natural language conversion architecture, wherein the computerized apparatus comprises: (a) a processor; (b) a machine learning model; and (c) a tangible, non-transitory memory configured to communicate with the processor, the non-transitory memory having stored instructions which, when executed by the processor, are configured to cause the computerized apparatus to execute a method including the following steps: the processor converting IVR tree audio data into IVR tree text data, the IVR tree audio data includes spoken language generated using an IVR tree during a phone call; providing the IVR tree text data to the machine learning model with instructions on how to evaluate the IVR tree text data; and the machine learning model generating a set of natural language prompts based upon the IVR tree text data, wherein the set of natural language prompts include instructions for directing a received call based upon caller voice input.

The computerized apparatus of the third aspect may further comprise a database comprising an internal IVR architecture data, the machine learning model is configured to receive the internal IVR architecture data together with the IVR tree text data for generating the set of natural language prompts based upon the IVR tree text data and the internal IVR architecture data.

The processor may be further configured to supplement the IVR tree text data using the internal IVR architecture data prior to providing the IVR tree text data to the machine learning model.

The processor may use a depth-first traversal technique for traversing the IVR tree text data when converting the spoken language into the IVR tree text data.

The machine learning model may comprise a machine learning transformer model.

### DETAILED DESCRIPTION

The description of exemplary embodiments of the present disclosure provided herein is merely exemplary and is intended for purposes of illustration only; the following description is not intended to limit the scope of the disclosure as claimed. Moreover, recitation of multiple embodiments having stated features is not intended to exclude other embodiments having additional features or other embodiments incorporating different combinations of the stated features.

It must also be noted that, the term "exemplary" is used in the sense of "example," rather than "ideal."

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%). In various embodiments, the numerical value x is less than or equal to 10 - e.g., less than or equal to 5, to 2, to 1, or smaller.

As used herein, "IVR tree" refers to a phone system that uses automated technology to allow callers to interact with a business without speaking to a live agent.

As used herein, "database" refers to any suitable database for storing information, electronic files or code to be utilized to practice embodiments of this disclosure.

As used herein, "server" refers to any suitable server, computer or computing device for performing functions utilized to practice embodiments of this disclosure.

As used herein, "software" refers to programs or other operating information utilized by a processor or other computing hardware.

As used herein, the terms application, module, analyzer, generator, engine, and the like can refer to computer program instructions, encoded on computer storage medium for execution by, or to control the operation of, data processing apparatus. Alternatively, or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices).

As used herein, "tangible, non-transitory memory" refers to computer program instructions, encoded on computer storage medium for execution by, or to control the operation of, data processing apparatus. Alternatively, or additionally, the program instructions can be encoded on an artificially-generated propagated signal, e.g., a machine-generated electrical, optical, or electromagnetic signal, which is generated to encode information for transmission to a suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein. The computer storage medium can also be, or be included in, random access memory (RAM), read-only memory (ROM), electronically erasable programmable ROM (EEPROM), flash memory or other memory technology, compact disc ROM (CD-ROM), digital versatile disks (DVD) or other optical storage, magnetic cassettes, magnetic tape, magnetic disk storage or other magnetic storage devices, or any other tangible, physical medium which can be used to store computer readable information.

As used herein, the terms "component," "engine," "model," "module," "system," "server," "processor," "memory," and the like are intended to include one or more computer-related units, such as but not limited to hardware, firmware, a combination of hardware and software, software, or software in execution. For example, a component may be, but is not limited to being, a process running on a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

This disclosure provides a computerized system for transitioning an existing IVR tree, which may be difficult to maintain or lacks flexibility, to an equivalent, customizable, and flexible natural language prompt or set of natural language prompts. This transition can be achieved using various algorithms in combination with generative, context-aware AI tools.

IVR systems often rely heavily on static, pre-defined trees that require significant manual effort to update and maintain. These systems are typically rigid, making it difficult to adapt to new business needs or integrate advanced AI capabilities. The computerized systems, methods, and apparatus of the present disclosure aim to leverage generative AI to convert these static IVR trees into dynamic, natural language prompts. This approach not only simplifies the maintenance process but also enhances the user experience by allowing more intuitive and flexible interactions.

Computerized systems, methods, and apparatus provide a seamless transition from traditional dual-tone multi-frequency (DTMF)-based systems to modern, AI-driven solutions without loss of information. Computerized systems, methods, and apparatus combine audio traversal with script analysis, ensuring a faithful and comprehensive representation of the original IVR tree. This results in a more adaptable, user-friendly system that can easily evolve with business needs.

Many businesses today try to automate as many of their processes as possible. To serve as many customers as possible simultaneously, businesses will employ an IVR to expedite and categorize the reasons behind customer's calling. These IVR trees can grow over time with new areas of the business being created. Some companies even have dedicated employees whose job it is to update and maintain these IVR trees.

Computerized systems, methods, and apparatus of the present disclosure provide an automated method for customers to migrate their existing IVR Trees into a simplified generative AI prompt or set of prompts. This method will traverse through the IVR tree using the audio provided to try and piece together the flow in its entirety. A text-based document (internal IVR architecture data such as an internal script or diagram) can also be provided to guide the audio into syncing up the entire flow. This text-based document can be used to fill in any blanks that cannot be derived from the audio alone (e.g., dialable numbers for queues).

Computerized systems, methods, and apparatus of the present disclosure can be applied to various other domains where complex decision trees or workflows are prevalent. For instance, in customer support chatbots, the same method can be used to convert intricate decision trees into natural language prompts, enhancing the user experience and making the system more intuitive.

Before doing the conversion from a traditional IVR tree into a prompt or series of prompts in natural language some data is extracted and interpreted to provide an accurate and faithful representation of the IVR tree. There is a plethora of variations of IVR trees, made on different platforms, platforms and tools, so having a process that can extract the information of an IVR tree in a way that can be easily represented by prompts is desirable.

In a various IVR trees there are two main sources of data that can become information. First, the deployed IVR tree itself can be a source of data. The deployed IVR tree can be traversed by the users (and by computerized systems and methods of the present disclosure) by a series of options that can be input via DTMF or in some more modern cases by audio inputs provided by the user. For example, a company can have an IVR in place, as follows:
o Thank you for calling our business, press 1 for English or 2 for French.
∘ Press 1 for sales, 2 for support
o Press 1 if you are existing customer or 2 if you are new
o .... etc.
Second, the internal IVR architecture data (e.g., an internal script or diagram description of the IVR tree), which is internally maintained and can be in a series of text formats (Json, Yaml, Toml, XML...), can be a source of data.

Each source by itself might not be enough to provide a faithful description of the original IVR tree into a prompt or series of prompts that can be dynamically used by a machine learning model to assess the user needs. Computerized systems, methods, and apparatus of the present disclosure can combine both sources to provide a good representation and to check with more accuracy the IVR tree route to be followed, the IVR tree intent, IVR tree options present, and/or placeholders if any.

For the deployed IVR tree traversal, a speech-to-text (STT) engine may be utilized to capture the sound outputs that come as feedback from the pressing of DTMF inputs or "user speech" (if the user needs to speak to proceed). A text-to speech (TTS) engine can be utilized if the second case is present-i.e., a user's voice/speech input is needed to proceed.

The natural language prompts can be generated utilizing a reasoning/extraction machine learning mode which has the access to the mentioned data and function call capabilities. The system can first traverse the IVR tree via DTMF or audio cues with a depth-first search (DFS) algorithm to systematically explore all paths in the IVR tree with graph traversal algorithms to detect and avoid loops or cycles in the IVR menu structure. The system can keep track of the path taken to reach each node in the tree (e.g., "1 > 2 > 1" for "English > sales > existing customer"). The paths taken can be evaluated in conjunction with the IVR script or diagram (or snippets from it) to avoid errors, evaluate intent, help into the traversal. This can be useful for correctly shaping the final intent of the generated prompts in a way that can be later used and interpreted correctly. The final output can be a prompt or set of prompts in natural language that faithfully translates to the IVR tree original intent. The natural language prompts have the added benefit of being able to evaluate the user's input more precisely, due to the flexibility of evaluation (as these prompts will be later on be user by a generative AI model to evaluate the customer's intent and correctly route him/her). The natural language prompts have the added benefit of being flexible, easy to read natural language prompts which can be easily customized and modified.

Summarizing, the system would traverse each of the IVR branches and would create a prompt that is the equivalent that can be used by a generative AI engine. In contrast to a DTMF based IVR engine, which would prompt an input by saying "press 1" for example, a speech-based engine would instead say something like "would you like to speak in English or French" which is using natural language.

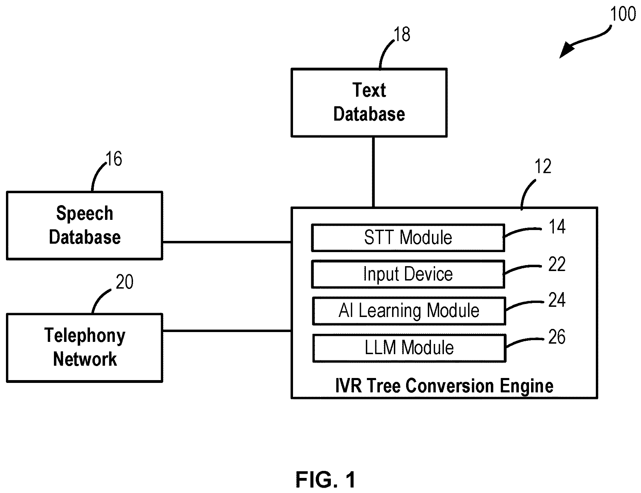

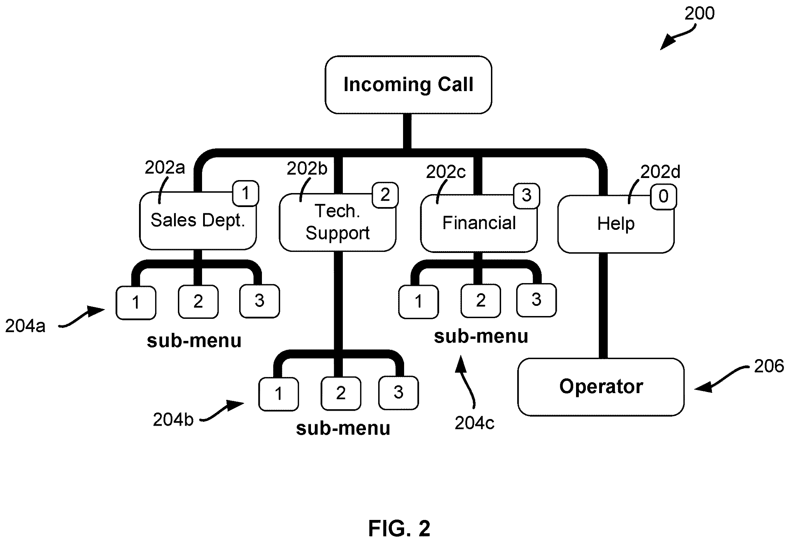

Turing to the Figures, wherein the purpose is to describe embodiments of this disclosure and not to limit the scope of the claims, FIG. 1 schematically illustrates an exemplary computerized system 100 in accordance with various aspects. The computerized system 100 can be configured to convert an interactive voice response (IVR) menu (e.g., an IVR tree or the like) into a natural language conversion architecture. For example, with momentary reference to FIG. 2, an exemplary IVR tree 200 is schematically illustrated. The IVR tree 200 can include a plurality of menus (also referred to as "branches"), such as first menu 202a, second menu 202b, third menu 202c, and fourth menu 202d. Each menu can be further divided into a plurality of sub-menus (also referred to as "sub-branches"), such as first sub-menu 204a, second sub-menu 204b, and third sub-menu 204c. A caller can use various voice commands, dial tones, and/or button selections to navigate the IVR tree 200. One or more menus can direct a caller to a desired department and/or human/callee. For example, selection of the fourth menu 202d can connect a caller with an operator 206.

Referring again to FIG. 1, the system 100 includes an IVR tree conversion engine 12. The IVR tree conversion engine 12 can include, and/or be in electronic communication with, a speech to text (STT) module 14. The STT module 14 may include hardware, for example, a sequence of logic units or software, for example, a program including a sequence of instructions, which when executed accept audio data and convert or transcribe the audio data into text data.

The IVR tree conversion engine 12 can be in electronic communication with a speech database 16. The speech database 16 can include pre-recorded audio files of an IVR tree. The STT module 14 may receive audio data from the speech database 106, for example as pre-recorded files, for real-time transcription. The STT module 14 may convert the audio data to text data and output converted text data and save the text data to text database 18 or any other suitable database or memory. The text data can include a structured text file that describes an architecture of the IVR tree. For example, the text data can include expected data inputs (e.g., voice/audio inputs, text inputs, button selections) that is received that would lead a caller to a particular menu, sub-menu, or callee.

The IVR tree conversion engine 12 can be in electronic communication with a telephony network 20. The telephony network 20 can be any type of telephone system capable of connecting user devices, such as cell phones, land-line phones, or computers. The STT module 14 may receive audio data from the telephony network 20, for example via an input device 22, such as a microphone for example, for real-time transcription. The audio data can include spoken language generated using an IVR tree during a phone call. The STT module 14 may convert the audio data to text data and output converted text data and save the text data to text database 18 or any other suitable database or memory.

In various aspects, the IVR tree conversion engine 12 can call a phone number via the telephony network 20 to access an IVR tree associated with the phone number. The IVR tree conversion engine 12 can "listen" to an audio output by the IVR tree and convert the audio output of the IVR tree to the text database 18 using the STT module 14. The IVR tree conversion engine 12 can navigate the IVR tree across different "branches" of the IVR tree to "learn" the architecture and operation of the IVR tree.

The IVR tree conversion engine 12 can include, and/or be in electronic communication with, a machine learning module 24. The machine learning module 24 may include hardware, for example, a sequence of logic units or software, for example, a program including a sequence of instructions, which when executed generate a set of natural language prompts based upon the IVR tree text data. The machine learning module 24 can comprise a machine learning transformer model (such as BERT, GPT-3, Bloom, T5, XLNet, etc.). The IVR tree conversion engine 12 can provide the IVR tree text data to the machine learning module 24. The IVR tree conversion engine 12 can provide the IVR tree text data to the machine learning module 24 with instructions on how to evaluate the IVR tree text data. The machine learning module 24 can be configured to generate a set of natural language prompts based upon the IVR tree text data. The set of natural language prompts can include instructions for directing a received call based upon caller voice input.

In various aspects, internal IVR architecture data (e.g., an internal IVR script, an internal IVR diagram, or both a script and diagram) associated with the IVR tree can be provided to the IVR tree conversion engine 12 for assisting in analyzing and/or learning the IVR tree. The internal IVR architecture data can be stored in the text database 18 or any other suitable database or memory in electronic communication with the IVR tree conversion engine 12. The internal IVR architecture data can include a description of the IVR tree. The internal IVR architecture data can be saved in one or more text formats (e.g., Json, Yaml, Toml, XML, etc.).

In various aspects, the natural language prompts can be generated by the machine learning module 24 further based upon the internal IVR architecture data. The IVR tree conversion engine 12 can provide the internal IVR architecture data to the machine learning module 24. The instructions on how to evaluate the IVR tree text data can further include how to evaluate the internal IVR architecture data.

In various aspects, the machine learning module 24 receives three inputs: 1) the IVR tree text data, 2) the internal IVR architecture data, and 3) the set of instructions on how to evaluate the IVR tree text data. The machine learning module 24 can analyze the inputs to generate the set of natural language prompts with instructions for directing a received call based upon caller input.

In various aspects, the IVR tree text data can be supplemented with the internal IVR architecture data prior to, and/or when, providing the IVR tree text data to the machine learning module 24. For example, the IVR tree conversion engine 12 can be provided with the internal IVR architecture data while navigating the IVR tree to assist the IVR tree conversion engine 12 in navigating and/or learning the architecture of the IVR tree. Accordingly, the IVR tree text data can include some or all of the internal IVR architecture data.

The IVR tree conversion engine 12 can include, and/or be in electronic communication with, a large language model (LLM) module 26. The LLM module 26 may include hardware, for example, a sequence of logic units or software, for example, a program including a sequence of instructions, which when executed to analyze the set of natural language prompts. In various aspects, the LLM module 26 generates prompts that are dictated to a caller to assist the caller and direct the caller to the correct person and/or to provide the caller with desired information.

The LLM module 26 can include a LLM. A LLM is a type of artificial intelligence (AI) program that is built on machine learning. The machine learning may include a type of neural network called a transformer model. The LLM may recognize content (e.g., text) and generate content. The LLM is a very large deep learning model, and the LLM is typically trained on very large data sets. A generative pre-trained transformer (GPT) may include a family of LLMs built on a transformer architecture. Some of the top LLM models include, for example, GPT-4, LLaMA 2, Mistral 7B, Claude Sonnet, Gemini, and Phi-3.

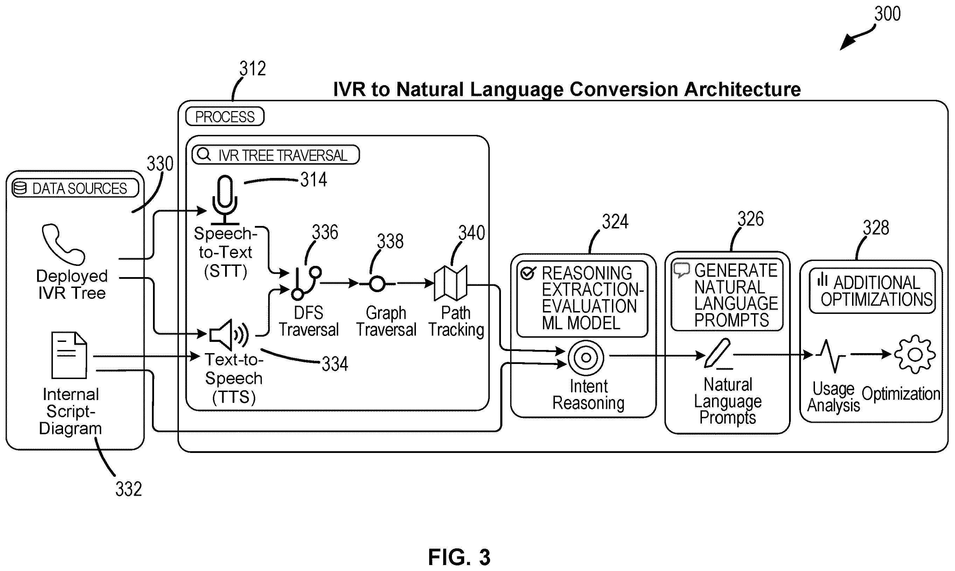

FIG. 3 shows a block diagram for a computerized system 300 in accordance with various aspects. The computerized system 300 can be similar to computerized system 100 in accordance with various aspects. The computerized system 300 can include an IVR tree conversion engine 312 configured to receive IVR tree audio data 330. The IVR tree conversion engine 312 can include, and/or be in electronic communication with, a STT module 314 configured to convert the IVR tree audio data 330 into text data. The IVR tree conversion engine 312 can be configured to receive an internal IVR architecture data 332, which can include text data about the architecture of the IVR tree.

In various aspects, the IVR tree conversion engine 312 can include, and/or be in electronic communication with, a text-to-speech (TTS) module 334. The TTS module 334 can be used when the caller needs to speak to navigate the IVR tree. In this regard, the TTS module 334 can output audio/voice data, for example, using an output device such as a speaker for example, to provide inputs to the IVR tree to navigate the IVR tree.

In various aspects, the IVR tree conversion engine 312 can perform depth-first search (DFS)-based traversal of the IVR tree using a DFS traversal module 336. DFS is a technique used for traversing trees and/or graphs. In DFS, backtracking is used for traversal. In DFS, the deepest node is visited and then backtracks to its parent node if no sibling of that node exists. Other traversal techniques that could be used include breadth-first search (BFS)-based traversal. BFS traversal explores all the neighboring nodes at the present depth prior to moving on to the nodes at the next depth level.

In various aspects, the IVR tree conversion engine 312 can perform graph traversal of the IVR tree using a graph traversal module 338. Graph traversal (also known as graph search) refers to the process of visiting each vertex in an IVR menu. The graph traversal module 338 can utilize graph traversal algorithms to detect and avoid loops or cycles in the IVR menu structure.

Traversal of the IVR tree can be performed via dual-tone multi-frequency (DTMF) or audio cues with the DFS traversal module 336 and/or the graph traversal module 338. The IVR tree conversion engine 312 can utilize a path tracking module 340 to keep track of the path taken to reach each node in the tree (e.g., "1 > 2 > 1" for "English > Sales > Existing Customer"). The paths taken can be evaluated in conjunction with the IVR script or diagram (or snippets from it) to avoid errors, evaluate intent, help into the traversal. Supplementing the IVR tree with the internal IVR architecture data can aid in correctly shaping the final intent of the generated prompts in a way that can be later used and interpreted correctly.

The IVR tree conversion engine 312 can include a machine learning module 324 configured to receive IVR tree text data, the internal IVR architecture data, and/or instructions on how to evaluate the IVR tree text data and/or the internal IVR architecture data. The machine learning module 324 can use the inputs to generate a prompt or set of prompts 326 in natural language that faithfully translates to the IVR tree original intent. Stated differently, the machine learning module 324 can output a set of natural language prompts 326 based upon the IVR tree text data, wherein the set of natural language prompts 326 include instructions for directing a received call based upon caller voice input. For example, the IVR tree can be replaced with the set of natural language prompts 326 which are used to direct future calls received by a system that utilizes the set of natural language prompts 326. These prompts can include questions, prompts, or information for the caller to determine how to handle the incoming call. The system can use a LLM to interpret what the caller says and determine how to respond or direct the call based on what the caller is saying. For example, the voice data received from the caller can be transformed from speech to text, and then fed into the LLM/transformer model with the set of natural language prompts 326 to evaluate the caller's requests/input.

In various aspects, the IVR tree conversion engine 312 can perform additional optimizations 328 such as removing any duplicated or unused branches. The optimizations 328 can further suggest improvements such as a "dial by name" lookup if not implemented. The optimizations 328 can include usage analysis which can be used to further improve the prompts.

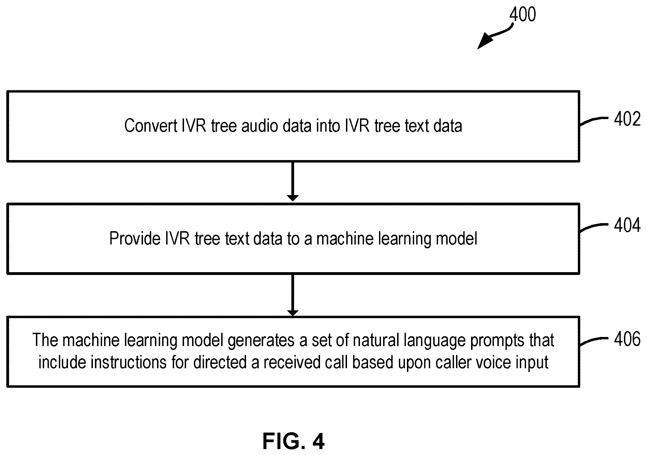

FIG. 4 is a flow chart for a computerized method 400 for converting an IVR tree into a natural language conversion architecture, in accordance with various embodiments. For ease of description, the method 400 is described below with reference to FIG. 3. The method 400 of the present disclosure, however, is not limited to use of the exemplary computerized system 300 of FIG. 3.

In step 402, the method 400 includes converting IVR tree audio data into IVR tree text data. Step 402 can include converting the IVR tree audio data 330 into IVR tree text data, for example using the STT module 314.

In step 404, the method 400 includes providing the IVR tree text data to a machine learning model. Step 404 can include providing the IVR tree text data to the machine learning module 324.

In step 406, the machine learning model generates a set of natural language prompts that include instructions for directed a received call based upon caller voice input. Step 406 can include generating the natural language prompts 326.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. 9 101.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching may be used throughout the figures to denote different parts but not necessarily to denote the same or different materials.

Methods, systems, and articles are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A computerized method for converting an interactive voice response (IVR) tree into a natural language conversion architecture, wherein the computerized method comprises the following steps:
converting IVR tree audio data into IVR tree text data, the IVR tree audio data includes spoken language generated using the IVR tree during a phone call;
providing the IVR tree text data to a machine learning model with instructions on how to evaluate the IVR tree text data; and
the machine learning model generating a set of natural language prompts based upon the IVR tree text data, wherein the set of natural language prompts include instructions for directing a received call based upon caller voice input.

2. The computerized method of claim 1 that further comprises the step of providing an internal IVR architecture data together with the IVR tree text data to the machine learning model, the set of natural language prompts are generated based upon the internal IVR architecture data, and the instructions include how to evaluate the internal IVR architecture data.

3. The computerized method of claim 2 that further comprises the step of supplementing the IVR tree text data with the internal IVR architecture data prior to providing the IVR tree text data to the machine learning model.

4. The computerized method of any preceding claim, wherein the step of converting IVR tree audio data into IVR tree text data includes utilizing a speech-to-text module to convert the IVR tree audio data into the IVR tree text data.

5. The computerized method of any preceding claim, wherein the step of converting IVR tree audio data into IVR tree text data includes using a depth-first traversal technique for traversing the IVR tree text data.

6. The computerized method of any of claims 1 to 5, wherein the IVR tree text data comprises a structured text file.

7. The computerized method of claims 1 to 5, wherein the machine learning model comprises a machine learning transformer model.

8. A computerized apparatus configured to convert an interactive voice response (IVR) tree into a natural language conversion architecture, wherein the computerized apparatus comprises: (a) a processor; (b) a machine learning model; and (c) a tangible, non-transitory memory configured to communicate with the processor, the non-transitory memory having stored instructions which, when executed by the processor, are configured to cause the computerized apparatus to execute a method according to any of claims 1 to 7.

9. A computerized system configured to convert an interactive voice response (IVR) tree into a natural language conversion architecture, wherein the computerized system comprises:
a processor configured to convert IVR tree audio data into IVR tree text data, the IVR tree audio data includes spoken language generated using the IVR tree during a phone call; and
a machine learning model configured to receive the IVR tree text data for generating a set of natural language prompts based upon the IVR tree text data, wherein the set of natural language prompts include instructions for directing a received call based upon caller voice input.

10. The computerized system of claim 9 that further comprises a database comprising an internal IVR architecture data, the machine learning model is configured to receive the internal IVR architecture data together with the IVR tree text data for generating the set of natural language prompts based upon the IVR tree text data and the internal IVR architecture data.

11. The computerized system of claim 10, wherein the processor is further configured to supplement the IVR tree text data using the internal IVR architecture data prior to providing the IVR tree text data to the machine learning model.

12. The computerized system of any of claims 9 to 11, wherein the processor comprises a speech-to-text module to convert the spoken language into the IVR tree text data.

13. The computerized system of any of claims 9 to 12, wherein the processor uses a depth-first traversal technique for traversing the IVR tree text data when converting the spoken language into the IVR tree text data.

14. The computerized system of any of claims 9 to 13, wherein the IVR tree text data comprises a structured text file.

15. The computerized system of any of claims 9 to 14, wherein the machine learning model comprises a machine learning transformer model or that further comprises a large language model (LLM) module configured to analyze the set of natural language prompts.
